# EUROPÄISCHE PATENTSCHRIFT

(11) **EP 2 192 665 B1**
(45) Veröffentlichungstag und Bekanntmachung des Hinweises auf die Patenterteilung: **11.05.2011**
(21) Anmeldenummer: 09013071.7
(22) Anmeldetag: 16.10.2009
(51) Int. Cl.: H02G 3/14, H02G 3/18, H01R 4/64

(54) **Bodeneinbaukassette für elektrische Installationsgeräte**
Floor installation box for electric installation devices
Cassette d'installation au sol pour appareils d'installation électriques

(30) Priorität: 01.12.2008 DE 102008060808
(43) Veröffentlichungstag der Anmeldung: 02.06.2010
(73) Patentinhaber: OBO Bettermann GmbH & Co. KG, 58710 Menden (DE)
(72) Erfinder: Herzig, Markus, 51643 Gummersbach (DE)
(74) Vertreter: Wilhelm, Martin

(56) Entgegenhaltungen:
- EP-A2- 1 811 624
- WO-A1-01/39331
- DE-C1- 19 507 846
- DE-C1- 19 614 692
- DE-U1-202006 006 418
- US-A- 5 278 351

## Beschreibung

Die Erfindung betrifft eine Bodeneinbaukassette für elektrische Installationsgeräte mit wenigstens zwei relativ zueinander verschwenkbaren und aneinander angelenkten Bauteilen, insbesondere einem Gehäuse und einem in das Gehäuse einsetzbaren Deckel, wobei die Bauteile wenigstens abschnittsweise aus elektrisch leitfähigem Material bestehen.

Eine gattungsgemäße Bodeneinbaukassette ist beispielsweise aus der europäischen Offenlegungsschrift EP 1 811 624 A2 bekannt. Bei gattungsgemäßen Bodeneinbaukassetten müssen alle Bauteile geerdet werden. Dies gilt beispielsweise auch für einen Deckel der Einbaukassette und einen eventuell beweglich am Deckel angeordneten Schnurauslass. Üblicherweise wird lediglich eines der Bauteile, beispielsweise das Gehäuse, mit einem Erdungskabel verbunden und zwischen den einzelnen Bauteilen, speziell dem Gehäuse, einem Deckel und einem eventuellen Schnurauslass, wird ein Potentialausgleich über einen flexiblen Leiter vorgesehen. Mittels solcher flexibler Leiter lässt sich zwar ein zuverlässiger Potentialausgleich bereitstellen, das Anbringen der flexiblen Leiter ist aber zeitaufwändig und der flexible Leiter kann bei der Benutzung der Bodeneinbaukassette oder deren Installation stören.

Aus der internationalen Offenlegungsschrift WO 01/39331 A1 ist ein Gehäuse zur Unterbringung von elektrischen oder elektronischen Bauteilen bekannt, bei dem zwischen Gehäuseteilen federnde Kontaktelemente vorgesehen sind, die eine sichere Kontaktierung der Gehäuseteile auch nach einer mehrmaligen Montage und Demontage der Gehäuseteile gewährleisten. Die Gehäuseteile werden miteinander verschraubt oder verrastet.

Weitere federnde Kontaktelemente zwischen miteinander verbindbaren Gehäuseteilen sind aus der deutschen Patentschrift DE 196 14 692 C1, der deutschen Patentschrift DE 195 07 846 C1 und dem US-Patent 5,278,351 bekannt. Die dort beschriebenen Gehäuse, beispielsweise Schaltschränke oder PC-Gehäuse, werden mittels einer linearen Bewegung der Gehäuseteile zueinander miteinander verbunden und mittels Schrauben oder Rastelementen aneinander gesichert.

Aus der deutschen Gebrauchsmusterschrift DE 20 2006 006 418 U1 ist ein metallischer Kabelkanal bekannt, bei dem eine elektrische Kontaktierung zwischen Deckel und Unterteil mittels federnder Kontaktfahnen erfolgt.

Mit der Erfindung soll eine Bodeneinbaukassette für elektrische Installationsgeräte bereitgestellt werden, bei der mit geringem Aufwand ein Potentialausgleich zwischen den einzelnen Bauteilen hergestellt werden kann.

Erfindungsgemäß ist hierzu eine Bodeneinbaukassette für elektrische Installationsgeräte mit wenigstens zwei relativ zueinander verschwenkbaren und aneinander angelenkten Bauteilen, insbesondere einem Gehäuse und einem in das Gehäuse einsetzbaren Deckel, vorgesehen, wobei die Bauteile wenigstens abschnittsweise aus elektrisch leitfähigem Material bestehen, bei der zwischen den relativ zueinander verschwenkbaren Bauteilen ein elektrisch leitfähiger Schleifkontakt vorgesehen ist.

Durch Vorsehen eines Schleifkontakts zwischen den Bauteilen, insbesondere zwischen Deckel und Gehäuse, lässt sich auf überraschend einfache Weise ein Potentialausgleich zwischen den einzelnen Bauteilen herstellen. Überraschenderweise reicht der Übergangswiderstand eines solchen Schleifkontakts aus, um die gesetzlichen Anforderungen zu erfüllen. Der Schleifkontakt stellt eine leitende Verbindung zwischen zwei Bauteilen durch einen federnden Kontaktpunkt her, der auf einer Kontaktbahn aufsitzt. Werden die Bauteile, beispielsweise der Deckel und das Gehäuse, gegeneinander bewegt, so kann sich der federnde Kontaktpunkt entlang der Kontaktbahn bewegen. Der elektrische Kontakt zwischen Deckel und Gehäuse und damit der erforderliche Potentialausgleich bleibt während einer Relativbewegung von Deckel und Gehäuse aber erhalten. Ein Potentialausgleich kann durch einfaches Aufsetzen des Kontaktpunktes auf die Kontaktbahn erfolgen, was zweckmäßigerweise beim Einsetzen des Deckels in das Gehäuse bewirkt wird. Die erfindungsgemäße Bodeneinbaukassette ist damit wesentlich einfacher zu montieren als bekannte Bodeneinbaukassetten, da auf das Verbinden separater, flexibler Kabel verzichtet werden kann. Als Deckel und Gehäuse im Sinne der Erfindung werden allgemein Deckel, Kappen, Klappen oder dergleichen verstanden, die an einem Gehäuse einer Bodeneinbaukassette montiert sind, um eine Öffnung im Gehäuse wahlweise zu öffnen oder zu verschließen oder auch nur um eine relative Lage von Deckel und Gehäuse zueinander verändern zu können. Das erfindungsgemäße Erdungskonzept lässt sich selbstverständlich allgemein auf Gehäuse für Elektroinstallationen mit zwei relativ zueinander verschwenkbaren und aneinander angelenkten Bauteilen anwenden, wobei dann zwischen den beiden Bauteilen ein mittels Federzungen realisierter Schleifkontakt vorgesehen ist, um eine niederohmige elektrische Verbindung zum Zwecke der Erdung zwischen den Bauteilen herzustellen. Diese Federzungen sind vorteilhafterweise aus dem Material der Bauteile selbst herausgestanzt, so dass keine separaten Bauteile mehr für die Herstellung eines elektrischen Kontakts zwischen den relativ zueinander beweglichen Bauteilen erforderlich ist. Die Federzungen sind dann einstückig mit einer Wandung des jeweiligen Bauteils gebildet.

In Weiterbildung der Erfindung ist der wenigstens eine Schleifkontakt zwischen Gehäuse und Deckel angeordnet.

In Weiterbildung der Erfindung weisen die Bauteile, insbesondere der Deckel und das Gehäuse, zwei zueinander und zu einer Öffnungsrichtung der Bauteile im Wesentlichen parallele Wandungen auf, wobei der Schleifkontakt an einer der beiden Wandungen angeordnet ist.

Auf diese Weise verändert sich ein Abstand der zueinander parallelen Wandungen während des Öffnungsvorgangs beispielsweise des Deckels nicht und ein Schleifkontakt kann während des gesamten Öffnungsvorgangs einen zuverlässigen Potentialausgleich sicherstellen.

In Weiterbildung der Erfindung weist der Schleifkontakt eine Federzunge auf, die an einer Wandung befestigt ist.

Mittels einer Federzunge lässt sich ein konstruktiv einfaches und zuverlässig federndes Kontaktelement bereitstellen.

In Weiterbildung der Erfindung ist die Federzunge einstückig mit der Wandung gebildet.

Auf diese Weise wird für die Federzunge kein separates Bauteil benötigt und die Federzunge kann beispielsweise mittels eines allgemein U-förmigen Schnitts aus der Wandung des Deckels oder des Gehäuses herausgeschnitten werden. Ein solcher Schnitt kann beispielsweise mittels Laserwerkzeugen durchgeführt werden, so dass das Anbringen der Federzunge in einfacher Weise in den Herstellungsprozess des Deckels oder des Gehäuses integriert werden kann.

In Weiterbildung der Erfindung ist die Federzunge im Bereich ihres freien Endes mit einer Auswölbung versehen, deren konvexe Seite der gegenüberliegenden Kontaktbahn zugewandt ist.

Mittels einer Auswölbung kann ein Kontaktpunkt geschaffen werden, der aufgrund seiner Anordnung an der Federzunge federnd auf der Kontaktbahn auf der gegenüberliegenden Wandung anliegt. Die Auswölbung kann auf der Rückseite einer Einprägung in die Federzunge ausgebildet sein.

Auf diese Weise wird für die Ausbildung des Kontaktpunktes selbst kein separates Bauteil benötigt.

In Weiterbildung der Erfindung weist die Federzunge in der Draufsicht auf die Wandung eine gebogene Form auf.

Durch Vorsehen einer gebogenen Form kann ein mit der Wandung verbundenes Ende der Federzunge vom Rand der Wandung aus in deren Mitte gerückt werden, um eine stabile Anordnung zu gewährleisten. Dennoch kann das freie Ende im Bereich einer Kante der Wandung angeordnet werden. Eine gebogene Form der Federzunge ermöglicht es dadurch, den Kontaktpunkt beispielsweise unterhalb einer Drehachse anzuordnen, um auch bei großen Öffnungswinkeln sicherzustellen, dass die Kontaktbahn noch vom Kontaktpunkt kontaktiert wird und dadurch ein Potentialausgleich hergestellt ist. Dies ist besonders dann vorteilhaft, wenn der Deckel an dem Gehäuse schwenkbar befestigt ist.

In Weiterbildung der Erfindung weist der Deckel eine Kabelauslassklappe auf, die schwenkbar am Deckel angeordnet ist, wobei wenigstens ein Schleifkontakt zwischen Kabelauslassklappe und Deckel vorgesehen ist.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine Ansicht einer erfindungsgemäßen Bodeneinbaukassette von schräg oben,
- Fig. 2: die Bodeneinbaukassette der Fig. 1 in teilweise auseinander gezogener Darstellung,
- Fig. 3: eine Draufsicht auf die Schnittebene III-III in Fig. 1,
- Fig. 4: die vergrößerte Einzelheit IV aus Fig. 3,
- Fig. 5: die vergrößerte Einzelheit V aus Fig. 3,
- Fig. 6: eine Ansicht der Kabelauslassklappe der Bodeneinbaukassette der Fig. 1 von schräg oben,
- Fig. 7: die vergrößerte Einzelheit VII aus Fig. 6,
- Fig. 8: eine Seitenansicht der Kabelauslassklappe der Fig. 6,
- Fig. 9: eine Ansicht des Deckels der Bodeneinbaukassette der Fig. 1 von schräg oben,
- Fig. 10: die vergrößerte Einzelheit X der Fig. 9 und
- Fig. 11: eine Seitenansicht des Deckels der Fig. 9.

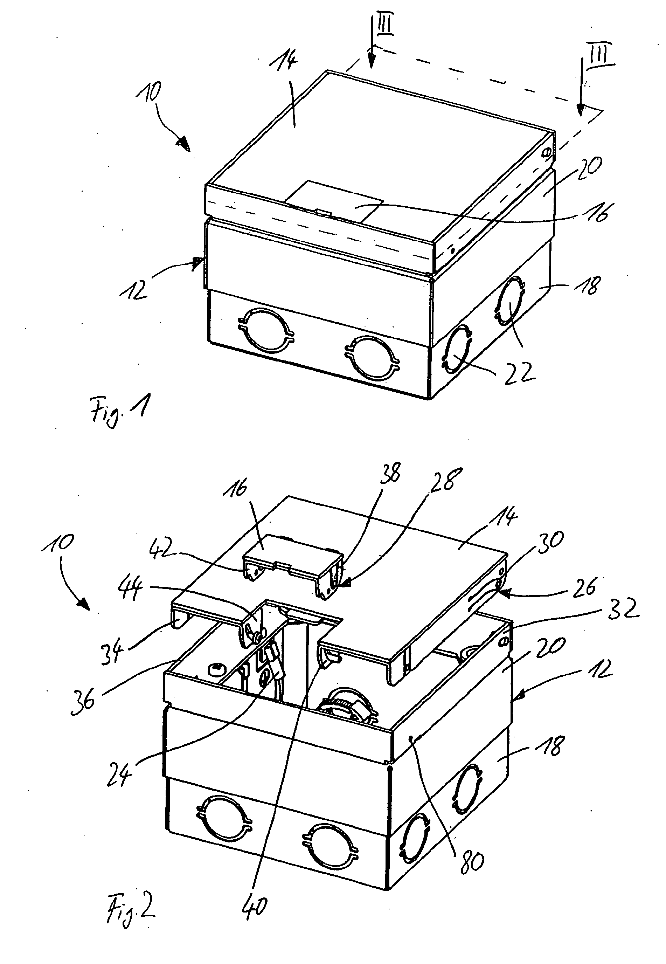

Die Darstellung der Fig. 1 zeigt eine erfindungsgemäße Bodeneinbaukassette 10, die ein Gehäuse 12 und einen in das Gehäuse eingesetzten Deckel 14 aufweist. Der Deckel 14 ist schwenkbar in das Gehäuse 12 eingesetzt. Am Deckel 14 selbst ist wiederum schwenkbar eine Kabelauslassklappe 16 angeordnet.

Das Gehäuse 12 besteht aus einem Unterteil 18 und einem Oberteil 20. Das Oberteil 20 und das Unterteil 18 können teleskopartig ineinander gleiten. Der Deckel 14 ist in einen nach oben offenen Rahmen des Oberteils 20 eingesetzt. Im Wesentlichen alle Bauteile der Bodeneinbaukassette 10 bestehen aus elektrisch leitfähigem und verzinktem oder nichtrostendem Stahlblech.

Die Bodeneinbaukassette 10 wird vor Ausbringen eines Estrichs auf dem Rohboden eines Gebäudes montiert, indem das Unterteil 18 mit dem Rohboden verbunden wird. Kabelkanäle werden ebenfalls auf dem Rohboden befestigt und münden dann an Öffnungen 22 im Unterteil 18, die in der Darstellung der Fig. 1 noch mit ausbrechbaren Blechstücken verschlossen sind. Das Oberteil 20 wird dann relativ zum Rohboden beziehungsweise relativ zum Unterteil 18 in der Höhe nivelliert, so dass die Oberkante des Oberteils 20 bündig mit einer vorgesehenen Estrichoberfläche ist.

Um die sichere Erdung aller Bestandteile der Bodeneinbaukassette 10 zu gewährleisten, ist zum einen die Verbindung wenigstens einer dieser Bestandteile mit einem Erdkabel und darüber hinaus ein Potentialausgleich zwischen den einzelnen Bauteilen erforderlich.

Anhand der Darstellung der Fig. 2 ist zu erkennen, dass zwischen dem Unterteil 18 und dem Oberteil 20 in konventioneller Weise ein flexibles Potentialausgleichskabel 24 vorgesehen ist. Das Unterteil 18 wird in nicht dargestellter Weise mit einem Erdungskabel verbunden. Um nun einen Potentialausgleich zwischen dem Oberteil 20, dem Deckel 14 und der Kabelauslassklappe 16 herzustellen, sind zwischen dem Deckel 14 und dem Oberteil 20 des Gehäuses 12 zwei Schleifkontakte 26 vorgesehen, von denen in der Fig. 2 lediglich einer erkennbar ist. In ähnlicher Weise sind zwischen dem Deckel 14 und der Kabelauslassklappe 16 zwei weitere Schleifkontakte 28 vorgesehen, von denen in Fig. 2 lediglich einer erkennbar ist. Der Schleifkontakt 26 verbindet eine Wandung 30 des Deckels 14 elektrisch mit einer Wandung 32 des nach oben offenen Rahmens des Oberteils 20. Die beiden Wandungen 30, 32 sind parallel zueinander angeordnet und darüber hinaus auch parallel zu einer Öffnungsrichtung des Deckels 14 angeordnet. Beim Aufklappen des Deckels 14 bleiben die Wandungen 30, 32 somit in ihrer parallel zueinander ausgerichteten Stellung, auch wenn sie zueinander verschwenkt werden. Während des gesamten Öffnungsvorgangs des Deckels 14 kann der Schleifkontakt 26 dadurch einen Potentialausgleich zwischen dem Deckel 14 und dem Oberteil 20 des Gehäuses 12 bewirken.

Der Deckel 14 ist symmetrisch aufgebaut und an einer der Wandung 30 gegenüberliegenden Wandung 34 ist der weitere Schleifkontakt angeordnet, der eine elektrische Verbindung zu der Wandung 36 des nach oben offenen Rahmens des Oberteils 20 bewirkt und der in der Darstellung der Fig. 2 nicht zu erkennen ist.

Der Schleifkontakt 28 ist an einer Wandung 38 der Kabelauslassklappe 16 angeordnet, die parallel zu einer Wandung 40 des Deckels 14 angeordnet ist. Ein weiterer, in der Darstellung der Fig. 2 nur abschnittsweise zu erkennender Schleifkontakt ist an einer Wandung 42 der Kabelauslassklappe 16 angeordnet, die gegenüber der Wandung 38 liegt. Die Wandung 42 ist wiederum parallel zu einer Wandung 44 am Deckel 14 angeordnet und der Schleifkontakt stellt eine elektrische Verbindung zwischen den Wandungen 42 und 44 her.

Wie in der Darstellung der Fig. 2 zu erkennen ist, sind die Schleifkontakte 26, 28 am Deckel 14 beziehungsweise an der Kabelauslassklappe 16 jeweils mittels einer Federzunge realisiert, die mit einer Auswölbung an ihrem freien Ende einen federnden Kontaktpunkt bildet, welcher permanent an der jeweils benachbarten Wandung 32, 36 des Oberteils 20 beziehungsweise an der Wandung 40, 44 des Deckels 14 anliegt und dadurch während des gesamten Öffnungsvorgangs sowie im geöffneten und im geschlossenen Zustand des Deckels 14 beziehungsweise der Kabelauslassklappe 16 einen Potentialausgleich zwischen der Kabelauslassklappe 16, dem Deckel 14 und dem Gehäuse 12 der Bodeneinbaukassette 10 sicherstellt.

Ein Übergangswiderstand der Schleifkontakte 26, 28 ist dabei zwar prinzipbedingt größer als der Übergangswiderstand des flexiblen Kupferkabels 24, das das Unterteil 18 und das Oberteil 20 elektrisch verbindet, der Übergangswiderstand der Schleifkontakte 26, 28 ist aber ausreichend gering, um einen zuverlässigen Potentialausgleich sicherzustellen und die geltenden Sicherheitsvorschriften zu erfüllen.

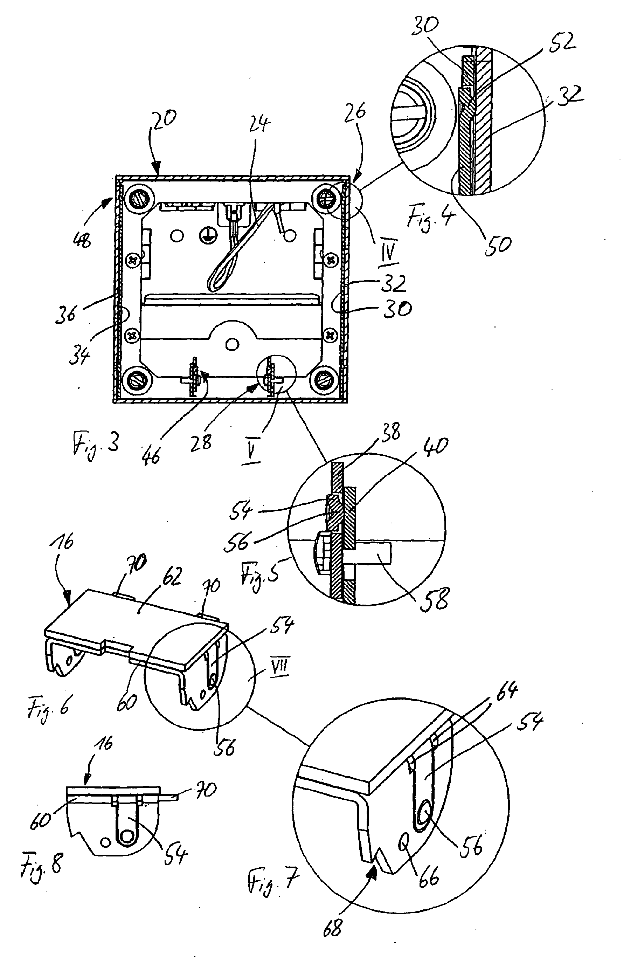

Die Ausbildung der Schleifkontakte 26, 28 ist in den Darstellungen der Fig. 3 bis 5 detaillierter zu erkennen.

Die Darstellung der Fig. 3 zeigt eine Draufsicht auf die Schnittebene III-III der Fig. 1 und neben den beiden Schleifkontakten 26, 28 sind die beiden weiteren Schleifkontakte 46, 48 zu erkennen. Der Schleifkontakt 46 ist gegenüberliegend dem Schleifkontakt 28 angeordnet und stellt wie dieser eine elektrische Verbindung der Kabelauslassklappe 16 mit dem Deckel 14 sicher. Der Schleifkontakt 48 ist gegenüber dem Schleifkontakt 26 angeordnet und stellt wie dieser eine elektrische Verbindung zwischen dem Deckel 14 und dem Oberteil 20 des Gehäuses 12 sicher.

In der Darstellung der Fig. 3 weiter zu erkennen sind die Wandungen 30 und 34 des Deckels 14, die parallel zu den Wandungen 32, 36 des Oberteils 20 angeordnet sind. Der Schleifkontakt 26 stellt eine elektrische Verbindung zwischen den Wandungen 30, 32 sicher, und der Schleifkontakt 48 stellt eine elektrische Verbindung zwischen den Wandungen 34, 36 sicher.

Fig. 4 zeigt eine vergrößerte Darstellung der Einzelheit IV aus Fig. 3. Zu erkennen ist ein Abschnitt der Wandung 32 des Oberteils 20 und ein Abschnitt der Wandung 30 des Deckels 14. Einstückig mit der Wandung 30 ist eine Federzunge 50 ausgebildet, die mittels eines allgemein U-förmigen Schnitts, siehe Fig. 2, aus der Wandung 30 ausgeschnitten ist. Die Federzunge 50 trägt an ihrem freien Ende eine Auswölbung 52, deren konvexe Seite der Wandung 32 zugewandt ist. Die Auswölbung 52 ist durch eine Einprägung auf der, der Wandung 32 gegenüberliegenden Seite der Federzunge 50 ausgebildet. Wie Fig. 4 zu entnehmen ist, liegt die Auswölbung 52 auf der Innenseite der Wandung 32 an. Die Federzunge 50 ist dadurch aus ihrer Ruhelage nach links, also von der Wandung 32 weg, ausgelenkt. Die Materialelastizität des Materials der Wandung 30 sorgt dadurch für eine Vorspannung der Auswölbung 52 in Richtung auf die Wandung 32 des Oberteils 20. Durch eine solche Federvorspannung wird zum einen ein niedriger elektrischer Übergangswiderstand sichergestellt und zum anderen können Fertigungstoleranzen von Deckel 14 und Oberteil 20 ausgeglichen werden.

Die Darstellung der Fig. 5 zeigt die Einzelheit V aus Fig. 3 in vergrößerter Darstellung. In Fig. 5 ist ein Abschnitt der Wandung 40 des Deckels 14 und ein Abschnitt der Wandung 38 der Kabelauslassklappe 16 zu erkennen. In der Wandung 38 ist eine Federzunge 54 ausgebildet, die mittels eines U-förmigen Schnitts in der Wandung 38 ausgebildet ist, siehe Fig. 2. Die Federzunge 54 trägt an ihrem freien Ende eine Auswölbung 56, die durch eine Einprägung realisiert ist und deren konvexe Seite an der Wandung 40 anliegt.

Die Kabelauslassklappe 16 wird mittels zweier Schraubbolzen 58 in Kulissenbahnen im Deckel 14 geführt, die in Form gekrümmter Langlöcher ausgebildet sind, siehe Fig. 2. Beim Öffnen der Kabelauslassklappe 16 wird diese somit um ihre in der Darstellung der Fig. 2 rechts oben liegende Hinterkante verschwenkt, wobei sich die Schraubbolzen 58 entlang der gekrümmten Langlöcher in den Wandungen 40, 44 des Deckels 14 bewegen. Dabei gleiten die Auswölbungen 56 entlang der Wandung 40, um einen permanenten Potentialausgleich zu bewirken.

Die Darstellung der Fig. 6 zeigt die Kabelauslassklappe 16 in vergrößerter Darstellung. Die Kabelauslassklappe 16 weist ein U-förmiges Hauptteil 60 und eine auf der Basis des Hauptteils 60 aufliegende Deckelplatte 62 auf. Die Deckelplatte 62 ist in etwa so groß wie die Basis des U-förmigen Hauptteils 60. Die Federzunge 54 ist mittels eines U-förmigen Schnitts in einem der Schenkel des Hauptteils 60 ausgebildet, wobei die beiden Schenkel des Hauptteils 60 jeweils senkrecht zur Basis beziehungsweise zur Deckelplatte 62 angeordnet sind.

Wie auch Fig. 7 zu entnehmen ist, erstreckt sich der U-förmige Schnitt bis in die Basis des Hauptteils 60 hinein. Die Federzunge 54 geht dadurch vom Rand der Basis des Hauptteils 60 aus und erstreckt sich bis kurz vor die untere Randbegrenzung des Schenkels des Hauptteils 60. Der U-förmige Schnitt, mit dem die Federzunge 54 aus dem Material der Wandung des Hauptteils 60 ausgeschnitten ist, weist im Bereich des mit dem Hauptteil 60 verbundenen Endes der Federzunge 54 deutlich verbreiterte Abschnitte 64 auf. In diesem Bereich kann der Schnitt, beispielsweise mittels eines Lasers, angesetzt beziehungsweise beendet werden und in diesem Bereich ist das Hauptteil 60 ausreichend stabil, um den Schnitt breiter ausführen zu können. Die Auswölbung 56 ist benachbart zu einer Durchgangsöffnung 66 im Schenkel des Hauptteils 60 der Kabelauslassklappe 16 angeordnet. Die Durchgangsöffnung 66 nimmt im montierten Zustand der Kabelauslassklappe 16 den Schraubbolzen 58 auf. Die Auswölbung 56 kann dadurch beim Öffnen und Schließen der Kabelauslassklappe 16 benachbart zu den gekrümmten Langlöchern in den Wandungen 40, 44 des Deckels 14 geführt werden. Auch bei großen Öffnungswinkeln der Kabelauslassklappe 16 liegt die Auswölbung 56 mit ihrer konvexen Seite dadurch noch zuverlässig an der Wandung 40 des Deckels 14 an.

Ein Absatz 68 am Hauptteil 60 ist dafür vorgesehen, die Kabelauslassklappe 16 im geöffneten Zustand am nach oben geöffneten Rahmen des Oberteils 20 arretieren zu können. Werden Kabel durch die Kabelauslassklappe 16 in das Innere der Bodeneinbaukassette 10 eingeführt, wird dadurch sichergestellt, dass die Kabelauslassklappe 16 auch bei Belastung nicht zuklappt und die Isolation des durchgeführten Kabels beschädigt.

Die Darstellung der Fig. 8 zeigt die Kabelauslassklappe 16 in einer Seitenansicht. Es ist gut zu erkennen, dass die Federzunge 54 von der Basis des Hauptteils 60 ausgeht und sich dann bis kurz vor die untere Berandung des Schenkels des Hauptteils 60 erstreckt. Die Basis des Hauptteils 60 weist zwei Vorsprünge 70 auf, die unter eine Deckelplatte des Deckels 14 greifen und die Kabelauslassklappe 16 auch im aufgeklappten Zustand am Deckel 14 halten.

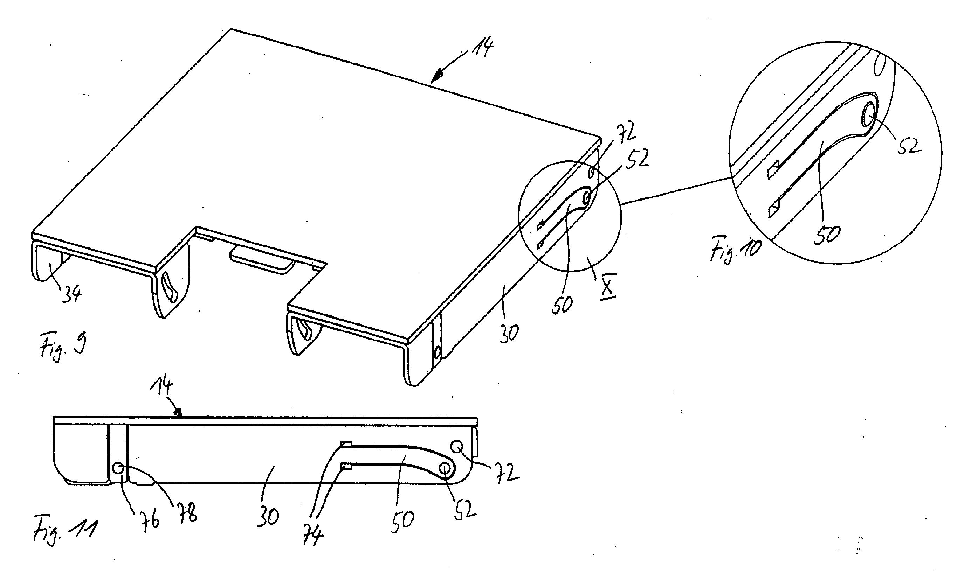

Die Darstellung der Fig. 9 zeigt den Deckel 14 in einer Ansicht von schräg oben. Gut zu erkennen ist die Ausbildung einer Federzunge 50 in der Wandung 30. Die Federzunge 50, siehe auch Fig. 10, weist dabei eine gekrümmte Form auf und das freie Ende der Federzunge 50 mit der Auswölbung 52 ist benachbart zu einer Durchgangsöffnung 72 in der Wandung 30 angeordnet. Die Durchgangsöffnung 72 nimmt im montierten Zustand des Deckels 14 eine Stummelachse auf, die in eine Ausnehmung im umlaufenden Rahmen des Oberteils 20 eingreift, siehe Fig. 1, und dadurch eine Schwenkachse des Deckels 14 bildet. Die Ausnehmung im Rahmen des Oberteils 20 ist dabei nicht kreisförmig, sondern etwa langlochförmig gestaltet, um eine überlagerte Translations-/ Rotationsbewegung des Deckels 14 beim Aufklappen zu ermöglichen. Die Anordnung der Auswölbung 52 benachbart zu der Durchgangsöffnung 72 beziehungsweise der in der Durchgangsöffnung 72 angeordneten Stummelachse ermöglicht es, die Auswölbung 52 auch bei vollständig geöffnetem Deckel 14 in Anlage an der Wandung des Oberteils 20 zu halten um dadurch einen zuverlässigen elektrischen Kontakt und Potentialausgleich zwischen Deckel 14 und Gehäuse 12 sicherzustellen.

Die in der Seitenansicht der Fig. 11 gut zu erkennende gekrümmte Form der Federzunge 50 ermöglicht es dabei, das freie Ende der Federzunge 50 mit der Auswölbung 52 zwischen der Durchgangsöffnung 72 und der in Fig. 11 unteren Berandung der Wandung 30 anzuordnen und dennoch die Federzunge 50 in einen weiter von dem unteren Rand der Wandung 30 beabstandeten Bereich mit der Wandung 30 zu verbinden. Dadurch wird die Wandung 30 weniger geschwächt als wenn die Federzunge 50 über ihre gesamte Länge parallel und dicht am unteren Rand der Wandung 30 verlaufen würde. Die durch diese Ausbildung und Anordnung der Federzunge 50 erreichbare große Länge der Federzunge 50 stellt deren ausreichende Elastizität und Auslenkbarkeit sicher. Auch anhand der Ansicht der Federzunge 50 in der Fig. 11 ist zu erkennen, dass die Federzunge 50 mittels eines allgemein U-förmigen Schnitts aus der Wandung 30 herausgeschnitten wird. Der Schnitt weist dabei in dem Bereich, in dem die Federzunge 50 von dem Material der Wandung 30 ausgeht, deutlich verbreiterte Bereiche auf, die den Anfangspunkt und den Endpunkt des Schnittes markieren. Beispielsweise können diese verbreiterten Bereiche 74 ausgestanzt werden und ein Laser kann dann ausgehend von diesen Ausnehmungen 74 den U-artigen Schnitt ausführen, wodurch dann die Federzunge 50 entsteht.

In der Darstellung der Fig. 11 ist auch eine weitere Federzunge 76 mit einer knopfartigen Auswölbung am Deckel 14 zu erkennen. Diese weitere Federzunge 76 ist aber nicht primär für einen Potentialausgleich zwischen Deckel 14 und Gehäuse 12 vorgesehen, sondern sorgt im geschlossenen Zustand des Deckels 14 für dessen exakte Positionierung. Die Auswölbung 78 greift im geschlossenen Zustand des Deckels in eine Durchgangsöffnung 80 am umlaufenden Rahmen des Oberteils 20 teilweise ein und definiert dadurch eine geschlossene Lage des Deckels 14. Dadurch kann sichergestellt werden, dass eine Deckplatte des Deckels 14 im geschlossenen Zustand exakt mit den Oberkanten des umlaufenden Rahmens des Oberteils 20 fluchtet. Da die Auswölbung 78 teilweise in die Durchgangsöffnung 80 eingreift, ist auch eine gewisse Lösekraft erforderlich, um den Deckel 14 öffnen zu können. Auch dies ist beabsichtigt, um ein teilweises Aufschnappen des Deckels 14 bei Trittbelastung zu vermeiden. Im geschlossenen Zustand des Deckels 14 trägt die Federzunge 76 mit der Auswölbung 78 selbstverständlich ebenfalls zum Potentialausgleich zwischen Deckel 14 und Gehäuse 12 bei. Die Verringerung des Übergangswiderstandes durch die Federzunge 76 ist aber nicht erforderlich, um einen zuverlässigen Potentialausgleich zu gewährleisten, hierfür genügen die beiden Schleifkontakte am Deckel 14, die mittels der Federzunge 50, der Auswölbung 52 sowie einer spiegelsymmetrisch in der gegenüberliegenden Wandung 34 des Deckels angeordneten weiteren Federzunge realisiert sind.

## Patentansprüche

1. Bodeneinbaukassette für elektrische Installationsgeräte mit wenigstens zwei relativ zueinander verschwenkbaren und aneinander angelenkten Bauteilen, insbesondere einem Gehäuse (12) und einem in das Gehäuse (12) einsetzbaren Deckel (14), wobei die Bauteile bei bestimmungsgemäßem Gebrauch der Bodeneinbaukassette relativ zueinander verschwenkt werden und wobei die Bauteile wenigstens abschnittsweise aus elektrisch leitfähigem Material bestehen, **dadurch gekennzeichnet, dass** zwischen den relativ zueinander verschwenkbaren Bauteilen wenigstens ein elektrisch leitfähiger Schleifkontakt (26, 28; 46, 48) vorgesehen ist.

2. Bodeneinbaukassette nach Anspruch 1, **dadurch gekennzeichnet, dass** der wenigstens eine Schleifkontakt (26, 28) zwischen Gehäuse (12) und Deckel (14) vorgesehen ist.

3. Bodeneinbaukassette nach Anspruch 1 oder 2, **dadurch gekennzeichnet, dass** die Bauteile, insbesondere der Deckel (14) und das Gehäuse (12) zwei zueinander und zu einer Öffnungsrichtung der Bauteile im Wesentlichen parallele Wandungen (30, 32, 34, 36, 38, 40) aufweisen, wobei der Schleifkontakt (26, 28, 46, 48) an einer der beiden Wandungen (30, 34, 38) angeordnet ist.

4. Bodeneinbaukassette nach einem der vorstehenden Ansprüche, **dadurch gekennzeichnet, dass** der Schleifkontakt (26, 28, 46, 48) eine Federzunge (50, 54) aufweist, die an einer Wandung (30, 38) eines der Bauteile befestigt ist.

5. Bodeneinbaukassette nach Anspruch 4, **dadurch gekennzeichnet, dass** die Federzunge (50, 54) einstückig mit der Wandung (30, 38) gebildet ist.

6. Bodeneinbaukassette nach Anspruch 4 oder 5, **dadurch gekennzeichnet, dass** die Federzunge (50, 54) im Bereich ihres freien Endes mit einer Auswölbung (52, 56) versehen ist, deren konvexe Seite der gegenüberliegenden Kontaktbahn zugewandt ist.

7. Bodeneinbaukassette nach Anspruch 6, **dadurch gekennzeichnet, dass** die Auswölbung (52, 56) auf der Rückseite einer Einprägung in die Federzunge (50, 54) ausgebildet ist.

8. Bodeneinbaukassette nach wenigstens einem der Ansprüche 4 bis 7, **dadurch gekennzeichnet, dass** die Federzunge (50) in der Draufsicht auf die Wandung 30) eine gebogene Form aufweist.

9. Bodeneinbaukassette nach wenigstens einem der vorstehenden Ansprüche, **dadurch gekennzeichnet, dass** der Deckel (14) an dem Gehäuse (12) schwenkbar befestigt ist.

10. Bodeneinbaukassette nach wenigstens einem der vorstehenden Ansprüche, **dadurch gekennzeichnet, dass** der Deckel (14) eine Kabelauslassklappe (16) aufweist, die schwenkbar am Deckel (14) angeordnet ist, wobei wenigstens ein Schleifkontakt (28, 46) zwischen Kabelauslassklappe (16) und Deckel (14) vorgesehen ist.

## Claims

1. Floor installation box for electric installation devices having at least two components pivotable relative to one another and hinge-connected to one another, in particular a housing (12) and a lid (14) insertable into said housing (12), where the components are, when the floor installation box is used for the intended purpose, pivoted relative to one another and where at least some sections of the components comprise electrically conductive material, **characterized in that** at least one electrically conductive sliding contact (26, 28; 46, 48) is provided between the components pivotable relative to one another.

2. Floor installation box according to Claim 1, **characterized in that** the at least one sliding contact (26, 28) is provided between the housing (12) and the lid (14).

3. Floor installation box according to Claim 1 or 2, **characterized in that** the components, in particular the lid (14) and the housing (12), have two walls (30, 32, 34, 36, 38, 40) substantially parallel to one another and to an opening direction of the components, where the sliding contact (26, 28, 46, 48) is arranged on one of the two walls (30, 34, 38).

4. Floor installation box according to one of the preceding claims, **characterized in that** the sliding contact (26, 28, 46, 48) has a spring tongue (50, 54) fastened to a wall (30, 38) of one of the components.

5. Floor installation box according to Claim 4, **characterized in that** the spring tongue (50, 54) is formed in one piece with the wall (30, 38).

6. Floor installation box according to Claim 4 or 5, **characterized in that** the spring tongue (50, 54) is provided in the area of its free end with an outward bulge (52, 56) whose convex side is facing the opposite contact path.

7. Floor installation box according to Claim 6, **characterized in that** the outward bulge (52, 56) is formed on the rear side of an indentation into the spring tongue (50, 54).

8. Floor installation box according to at least one of Claims 4 to 7, **characterized in that** the spring tongue (50) has a curved form when seen in a plan view onto the wall (30).

9. Floor installation box according to at least one of the preceding claims, **characterized in that** the lid (14) is pivotably fastened to the housing (12).

10. Floor installation box according to at least one of the preceding claims, **characterized in that** the lid (14) has a cable outlet flap (16) arranged pivotably on the lid (14), where at least one sliding contact (28, 46) is provided between the cable outlet flap (16) and the lid (14).

## Revendications

1. Cassette d'installation au sol pour appareils d'installations électriques, comprenant au moins deux composants pivotant l'un par rapport à l'autre et reliés entre eux de manière articulée, en particulier un boîtier (12) et un couvercle (14) insérable dans le boîtier (12), sachant que lors de l'utilisation conforme de la cassette d'installation, les composants sont pivotés l'un par rapport à l'autre et que les composants sont au moins partiellement constitués d'un matériau électroconducteur, **caractérisée en ce qu'**au moins un contact frotteur électroconducteur (26, 28 ; 46, 48) est prévu entre les composants pivotant l'un par rapport à l'autre.

2. Cassette d'installation au sol selon la revendication 1, **caractérisée en ce que** l'au moins un contact frotteur (26, 28) est prévu entre le boîtier (12) et le couvercle (14).

3. Cassette d'installation au sol selon la revendication 1 ou 2, **caractérisée en ce que** les composants, en particulier le couvercle (14) et le boîtier (12) présentent deux parois (30, 32, 34, 36, 38, 40) sensiblement parallèles entre elles et à une direction d'ouverture des composants, le contact frotteur (26, 28, 46, 48) étant placé sur l'une des deux parois (30, 34, 38).

4. Cassette d'installation au sol selon l'une des revendications précédentes, **caractérisée en ce que** le contact frotteur (26, 28, 46, 48) présente une languette flexible (50, 54) qui est fixée à une paroi (30, 38) d'un des composants.

5. Cassette d'installation au sol selon la revendication 4, **caractérisée en ce que** la languette flexible (50, 54) forme une seule pièce avec la paroi (30, 38).

6. Cassette d'installation au sol selon la revendication 4 ou 5, **caractérisée en ce que** la languette flexible (50, 54) est munie, dans la zone de son extrémité libre, d'un renflement (52, 56) dont le côté convexe est orienté en direction de la voie de contact opposée.

7. Cassette d'installation au sol selon la revendication 6, **caractérisée en ce que** le renflement (52, 56) est formé sur la face arrière d'un gaufrage dans la languette flexible (50, 54).

8. Cassette d'installation au sol selon au moins une des revendications 4 à 7, **caractérisée en ce que** dans une vue en élévation sur la paroi (30), la languette flexible (50) présente une forme incurvée.

9. Cassette d'installation au sol selon au moins une des revendications précédentes, **caractérisée en ce que** le couvercle (14) est fixé au boîtier (12) de manière pivotante.

10. Cassette d'installation au sol selon au moins une des revendications précédentes, **caractérisée en ce que** le couvercle (14) présente une trappe de sortie de câble (16) placée de manière pivotante sur le couvercle (14), sachant qu'au moins un contact frotteur (28, 46) est prévu entre la trappe de sortie de câble (16) et le couvercle (14).
